# EUROPEAN PATENT APPLICATION

(11) **EP 3 674 786 A1**
(43) Date of publication of application: **01.07.2020**
(21) Application number: 17922270.8
(22) Date of filing: 08.11.2017
(51) Int. Cl.: G02F 1/1335, G02F 1/1362

(54) **LIQUID CRYSTAL DISPLAY**

(30) Priority: 22.08.2017 CN 201710723028
(71) Applicant: Shenzhen China Star Optoelectronics Technology Co., Ltd., Shenzhen, Guangdong 518132 (CN)
(72) Inventor: CHEN, Lixuan, Shenzhen Guangdong 518000 (CN)
(74) Representative: V.O.
(86) International application number: PCT/CN2017/109830
(87) International publication number: WO 2019/037280

(57) **Abstract**

A liquid crystal display, which comprises: an array substrate (20), provided on the array substrate (20) being a first thin film transistor layer (21) and a first color filter layer (22); and a color film substrate (30), arranged opposite to the array substrate (20), a second thin film transistor layer (22) and a second color filter layer (32) being provided on the color film substrate (30), wherein the color resists for the first color filter layer (22) and the color resists for the second color filter layer (32) are arranged alternately. With the present invention, transmittance may be improved and energy consumption be reduced.

## Description

### FIELD OF DISCLOSURE

The present disclosure relates to the field of liquid crystal displays, and more particularly to liquid crystal displays.

### BACKGROUND

Advantages of liquid crystal displays include high quality, small size, light weight, low voltage drive, low power consumption, and wide application range, so liquid crystal displays have replaced cathode ray tube (CRT) to become a mainstream for next generation displays. A liquid crystal display is mainly constituted by a liquid crystal panel and a black light module. An area light (usually using a white light source) provided by the back light module can be used for gray scale display after a control of a liquid crystal display panel.

For color performance of the liquid crystal display, the liquid crystal display panel usually uses a color filter to accomplish color mixture of the lights of the backlight module, thereby displaying color. For example, in a case of a thin film transistor liquid crystal display (TFT-LCD), each pixel usually includes red, green, and blue color resists, and the size and interval space of color resists are less than what a human eye can detect. Thus, the human eye can see the liquid crystal display showing mixed colors of different colors (red, green, and blue).

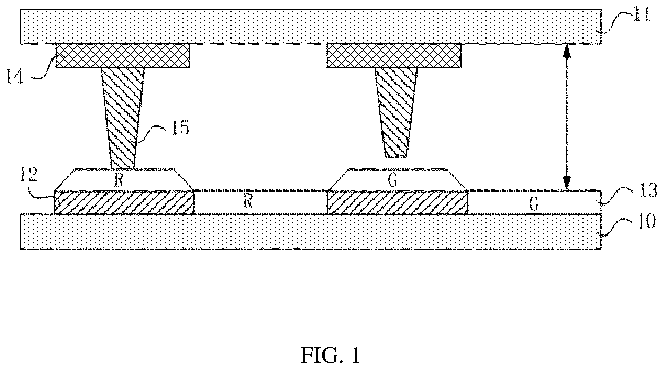

FIG. 1 is a structural diagram of a thin film transistor liquid crystal display in the prior art. The thin film transistor liquid crystal display includes an array substrate 10 and a color filter substrate 11 arranged opposite the array substrate 10. A thin film transistor (TFT) 12 and a color filter 13 are disposed on the array substrate 10. As described above, the color filter 13 if each pixel includes red (R), green (G), and blue (B) color resists, and size and interval space of color resists are less than what a human eye can detect. Thus, the human eye can see the liquid crystal display showing mixed colors of different colors (red, green, and blue). A light shielding block 14 is disposed on the color filter substrate 11, and the light shielding block 14 corresponds to the thin film transistor 12, to ensure the thin film transistor 12 is completely shielded from back light. Moreover, spacers 15 are located between the array substrate 10 and the color filter substrate 11, to form a cell gap between the array substrate 10 and the color filter substrate 11 (as indicated by a double-sided arrow in the figure).

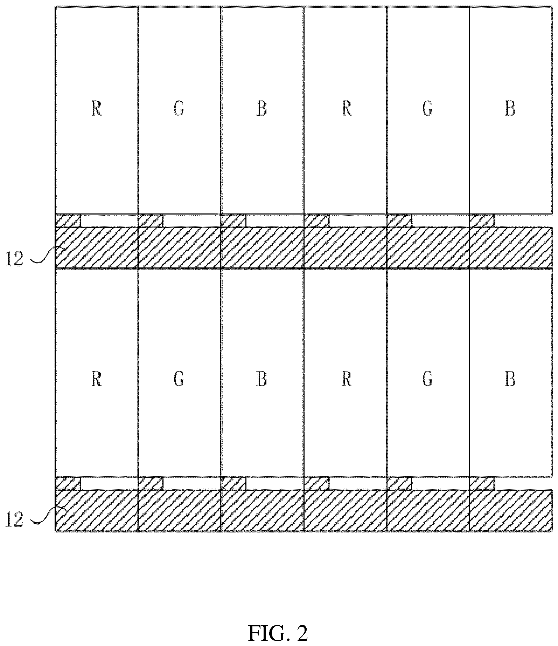

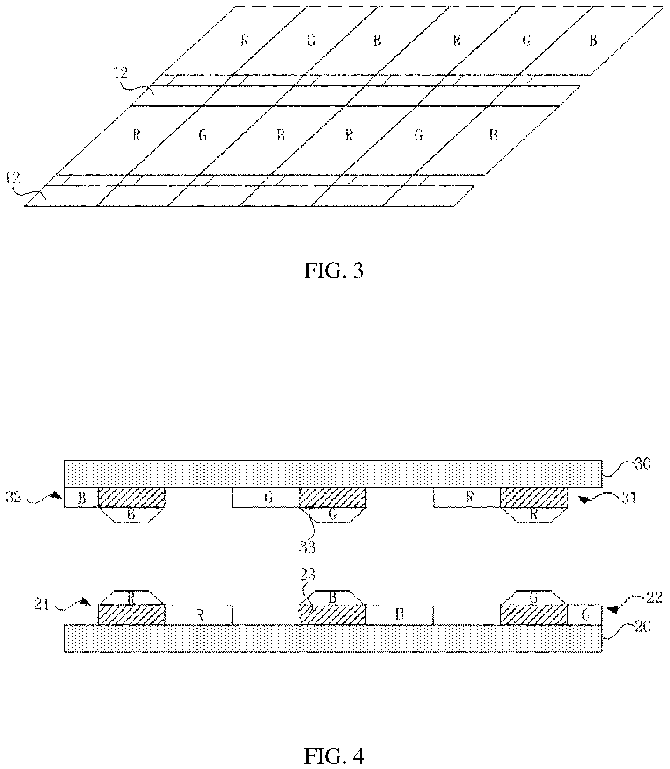

FIG. 2 is a structural diagram of an RGB pixel array in the prior art. FIG. 3 is a side view of FIG. 2. The thin film transistor 12 is connected to a pixel electrode of the color filter 13 through a conducting wire, and drives a corresponding liquid crystal to deflect in a vertical direction of the RGB pixels.

With development of displays, the displays follow a current trend toward narrow frames. Whether liquid crystal displays (LCD) or organic light-emitting diode displays (OLED), narrow frames and non-frame displays will bring about a better appearance.

However, at edges of a panel, including two sides of the panel and a side contacting with a source driver, there are bus lines areas that connect gate and data lines of each row or column pixel and wire on array (WOA). Design of such edge traces is necessary, but their presence causes the display panel to increase a distance from a display area to the edge, such that it is difficult to produce the narrow frames or non-frame displays, and there is a wide black border at a non-display area which is outside the display area. Also, when a resolution of the display panel rises from high definition (HD) to ultra-high definition (UHD) or higher, more areas are needed for disposing a growing number of scan lines and data lines, thereby resulting in difficulties in narrowing a border area.

Additionally, as LCDs use 2D1G or other techniques to improve picture quality, a number of thin film transistors per subpixel increases significantly. In particular, when there is a compensation circuit, the number of thin film transistors can be as high as 5 to 6. The area occupied by these thin film transistors greatly reduces an aperture region of the display, thereby decreasing a penetration rate.

### SUMMARY OF THE DISCLOSURE

An object of the present disclosure is to provide a liquid crystal display, by which an area occupied by thin film transistors can be reduced, in particular, for a complex drive designs, such that an aperture region of the display is increased, a penetration rate is also increased, and energy consumption is reduced.

In order to solve technical problems mentioned above, the present disclosure provides a liquid crystal display, including a first thin film transistor layer and a first color filter arranged on an array substrate; a color filter substrate arranged opposite the array substrate, where a second thin film transistor layer and a second color filter are disposed on the color filter substrate, a color resist of the first color filter is staggered with a color resist of the second color filter, and a thin film transistor of the first thin film transistor layer corresponds to a thin film transistor of the second thin film transistor layer; and a light shielding layer disposed at a side of the array substrate, and disposed on the thin film transistor of the first thin film transistor layer in a vertical direction.

The present disclosure also provides a liquid crystal display, including a first thin film transistor layer and a first color filter arranged on an array substrate; and a color filter substrate arranged opposite the array substrate, where a second thin film transistor layer and a second color filter are disposed on the color filter substrate, a color resist of the first color filter is staggered with a color resist of the second color filter.

In one embodiment, a thin film transistor of the first thin film transistor layer corresponds to a thin film transistor of the second thin film transistor layer.

In one embodiment, at a side of the array substrate, a light shielding layer is disposed on a thin film transistor of the first thin film transistor layer in a vertical direction.

In one embodiment, the light shielding layer is disposed above the thin film transistor of the first thin film transistor layer.

In one embodiment, the light shielding layer is disposed under the thin film transistor of the first thin film transistor layer.

In one embodiment, at a side of the color filter substrate, a light shielding layer is disposed on a thin film transistor of the second thin film transistor layer in a vertical direction.

In one embodiment, the light shielding layer is disposed above the thin film transistor of the second thin film transistor layer.

In one embodiment, the light shielding layer is disposed under the thin film transistor of the second thin film transistor layer.

In one embodiment, the first color filter is disposed on a thin film transistor of the first thin film transistor layer, and the second color filter is disposed on a thin film transistor of the second thin film transistor layer.

In one embodiment, color resists of the first color filter and color resists of the second color filter are staggered in a sequence of a red color resist, a green color resist, and a blue color resist.

In one embodiment, color resists of the first color filter and color resists of the second color filter are staggered in a sequence of a red color resist, a green color resist, a blue color resist, and a white color resist.

In one embodiment, color resists of the first color filter and color resists of the second color filter are staggered in a sequence of a red color resist, a green color resist, a blue color resist, and a yellow color resist.

In one embodiment, the first thin film transistor layer includes a plurality of thin film transistors disposed in a spaced-apart relationship.

In one embodiment, the second thin film transistor layer includes a plurality of thin film transistors disposed in a spaced-apart relationship.

An advantage of the present disclosure is that by disposing thin film transistors and color filters on both an array substrate and a color filter substrate, an area occupied by thin film transistors can be reduced. In particular, for 2T, 3T, and other complex drive designs, an aperture region of the display is increased, a penetration rate is also increased, and energy consumption is reduced.

### BRIEF DESCRIPTION OF THE DRAWINGS

FIG. 1 is a structural diagram of a thin film transistor liquid crystal display in the prior art.
FIG. 2 is a structural diagram of an RGB pixel array in the prior art.
FIG. 3 is a side view of FIG. 2.
FIG. 4 is a structural diagram of a liquid crystal display of a first preferable embodiment of the present disclosure.
FIG. 5 is a schematic diagram showing color resists of a first color filter and color resists of a second color filter being staggered according to the liquid crystal display of the present disclosure.
FIG. 6 is a structural diagram of a pixel array of the liquid crystal display of the present disclosure.
FIG. 7 is a structural diagram of a liquid crystal display of a second preferable embodiment of the present disclosure.
FIG. 8 is another structural diagram of the liquid crystal display of the second preferable embodiment of the present disclosure.

### DETAILED DESCRIPTION

Accompanying drawings to be used in the detailed description of liquid crystal displays of the disclosure will be briefly described herein below.

Narrow frames and non-frame displays will bring about a better appearance. However, since there are traces on edges, a distance from a display area to edges of a display panel is increased, such that it is difficult to product narrow frames or non-frame displays, and there is a wide black border at a non-display area which is outside the display area. Also, when a resolution of the display panel rises from HD to UHD or higher, more areas are needed for disposing a growing number of scan lines and data lines, thereby resulting in difficulties in narrowing a border area. Moreover, as LCDs use 2D1G or other techniques to improve picture quality, a number of thin film transistors in per subpixel increases significantly. In particular, when there is a compensation circuit, the number of thin film transistors can be as high as 5 to 6. The area occupied by these thin film transistors greatly reduces an aperture region of the display, thereby decreasing a penetration rate.

Therefore, the present disclosure provides a liquid crystal display, by which an area occupied by thin film transistors can be reduced. In particular, for 2T, 3T, and other complex drive designs, a display area of the display is increased, a penetration rate is also increased, and energy consumption is reduced.

FIG. 4 is a structural diagram of a liquid crystal display of a first preferable embodiment of the present disclosure. In the first preferable embodiment, the liquid crystal display includes an array substrate 20 and a color filter substrate 30 which is arranged opposite the array substrate 20. The array substrate 20 and the color filter substrate 30 may be glass substrates. As described in the background, spacers (not indicated in the drawings) are located between the array substrate 20 and the color filter substrate 30, so as to form a cell gap where liquid crystal material is filled. Peripheries of the array substrate 20 and color filter substrate 30 are sealed for preventing liquid crystal leakage.

A first thin film transistor layer 21 and a first color filter 22 are disposed on the array substrate 20. The first thin film transistor layer 21 includes a plurality of spaced thin film transistors 23. Structure of the thin film transistor 23 is the same as that of the conventional thin film transistor, and will not be described again. The first color filter 22 includes a plurality of red color resists R, green color resists G, and blue color resists B, or a plurality of red color resists R, green color resists G, blue color resists B, and white color resists W, or a plurality of red color resists R, green color resists G, blue color resists B, and yellow color resists Y. In this embodiment, the color resists of the first color filter 22 are not only disposed between two adjacent thin film transistors 23, but are also disposed on the adjacent thin film transistor 23, so as to shield light and prevent light leakage from the thin film transistor 23, which causes display performance of the liquid crystal display to decrease.

A second thin film transistor layer 31 and a second color filter 32 are disposed on the color filter substrate 30. The second thin film transistor layer 31 a plurality of thin film transistors 33 which are disposed in a spaced-apart relationship. The structure of the thin film transistor 33 is the same as that of the conventional thin film transistor, and will not be described again. The second color filter 32 includes a plurality of red color resists R, green color resists G, and blue color resists B, or a plurality of red color resists R, green color resists G, blue color resists B, and white color resists W, or a plurality of red color resists R, green color resists G, blue color resists B, and yellow color resists Y. In this embodiment, the color resists of the second color filter 32 are not only disposed between two adjacent thin film transistors 33, are but also disposed on the adjacent thin film transistor 33, so as to shield light and prevent light leakage from the thin film transistor 33, which causes display performance of the liquid crystal display to decrease.

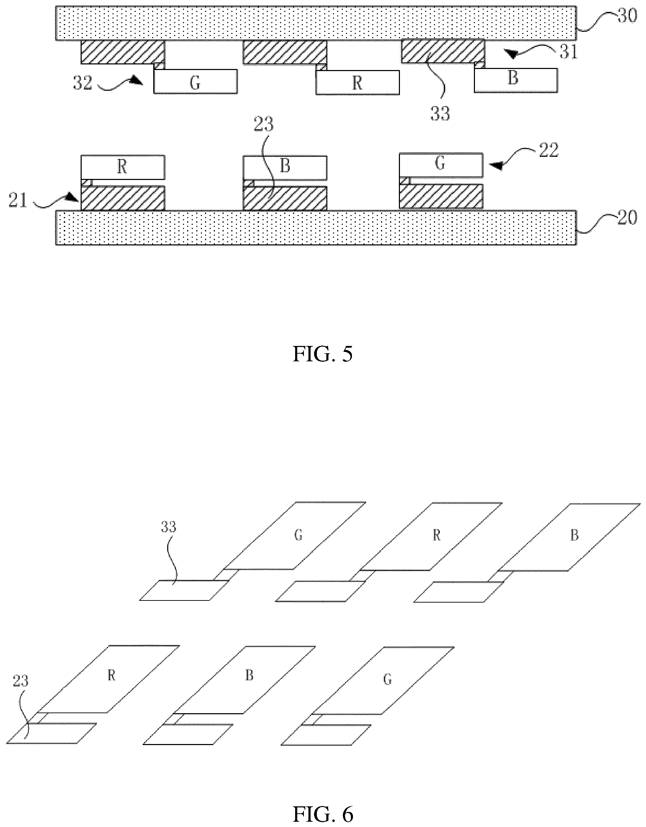

The color resists of the first color filter 22 and the color resists of the second color filter 32 are staggered. FIG. 5 is a schematic diagram showing color resists of a first color filter and color resists of a second color filter being staggered according to the liquid crystal display of the present disclosure. FIG. 6 is a structural diagram of a pixel array of the liquid crystal display of the present disclosure. Refer to FIG. 4, FIG. 5, and FIG. 6. In a vertical direction, on the color filter substrate 30, there is no color resist of the second color filter 32 disposed on a location which corresponds to the color resist of the first color filter 22. On the array substrate 20, there is no color resist of the first color filter 22 disposed on a location which corresponds to the color resist of the second color filter 32. The color resists of the first color filter 22 and the color resists of the second color filter 32 is arranged in a sequence of R-G-B, R-G-B-W, or R-G-B-Y. For example, in a case of the color resists of the first color filter 22 and the color resists of the second color filter 32 being arranged in a sequence of R-G-B, if a first color resist of the array substrate 20 is the red color resist R, the green color resist G is set at a sequential position corresponding to the red color resist R on the color filter substrate 30, the blue color resist B is set at a sequential position corresponding to the green color resist G on the array substrate 20, and the red color resist R is set at a sequential position corresponding to the blue color resist B on the color filter substrate 30, and so on. The color resists of the first color filter 22 and the color resists of the second color filter 32 are staggered.

Preferably, the thin film transistor of the first thin film transistor layer 21 correspond to the thin film transistors of the second thin film transistor layer 31. That is, in a vertical direction (Z-direction), the thin film transistors of the first thin film transistor layer 21 are opposite to the thin film transistors of the second thin film transistor layer 31, thereby reducing an area occupied by the thin film transistors. In this embodiment, the color resists of the first color filter 22 are not only disposed between two adjacent thin film transistors 23, are but also disposed on the adjacent thin film transistor 23, and the color resists of the second color filter 32 are not only disposed between two adjacent thin film transistors 33, are but also disposed on the adjacent thin film transistor 33. Thus, at the area occupied by the thin film transistors, there are two layers of the color resists, thereby enhancing light shielding by the thin film transistors and preventing light leakage from the thin film transistor 23, which causes display performance of the liquid crystal display to decrease.

In the first embodiment, in the area occupied by the thin film transistors, there are two layers of the color resists, thereby enhancing light shielding by the thin film transistors and preventing light leakage from the thin film transistor 23, which causes display performance of the liquid crystal display to decrease. In the second embodiment, in order to enhance light shielding by the thin film transistors, there is a light shielding layer, such as black matrix (BM), disposed on a region of the thin film transistors, where a light shielding performance of the black matrix is better than that of the color resists.

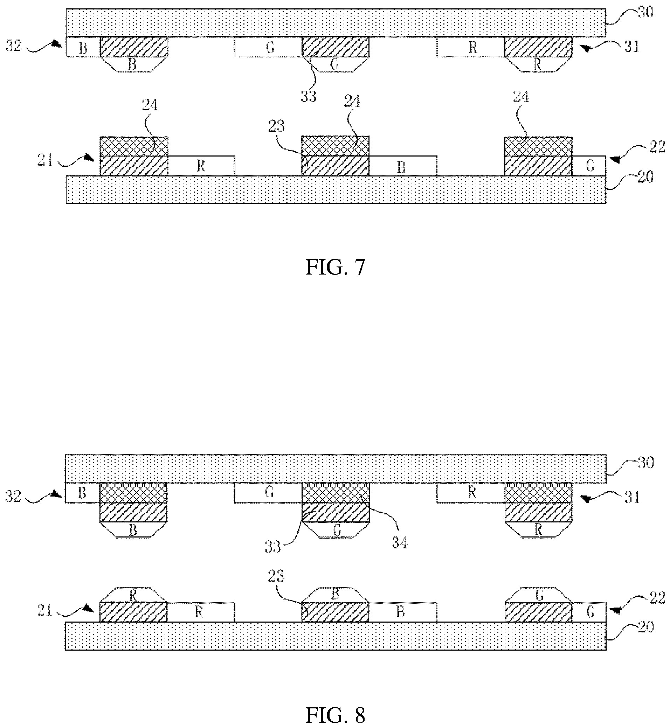

FIG. 7 is a structural diagram of a liquid crystal display of a second preferable embodiment of the present disclosure. In this embodiment, a light shielding layer 24 is disposed at a side of the array substrate 20, and disposed on the thin film transistors of the first thin film transistor layer 21 in a vertical direction. The light shielding layer 24 may be disposed upon the thin film transistor 23 (i.e., facing the color filter substrate 30), or may be disposed under the thin film transistor 23 (i.e., facing the array substrate 20). In FIG. 7, the light shielding layer 24 is disposed on upper surfaces of the thin film transistors 23 of the first thin film transistor layer 21 (i.e., facing a side surface of the color filter substrate 30). If the light shielding layer 24 is disposed on the thin film transistors, there is no color resist on the surface of the thin film transistor 23. The presence of the light shielding layer 24 further enhances the light shielding performance of the thin film transistors. The light from the thin film transistors is shielded, thereby preventing light leakage from the thin film transistor 23, which causes display performance of the liquid crystal display to decrease.

FIG. 8 is another structural diagram of the liquid crystal display of the second preferable embodiment of the present disclosure. In this embodiment, a light shielding layer 34 is disposed at a side of the array substrate 30, and disposed on the thin film transistors 33 of the second thin film transistor layer 31 in a vertical direction. The light shielding layer 34 may be disposed upon the thin film transistor 33 (i.e., facing the array substrate 20), or may be disposed under the thin film transistor 33 (i.e., facing the color filter substrate 30). In FIG. 8, the light shielding layer 34 is disposed on bottom surfaces of the thin film transistors 33 of the second thin film transistor layer 31 (i.e., facing a side surface of the color filter substrate 30). If the light shielding layer 34 is disposed on the thin film transistors, there is no color resist on the surface of the thin film transistor 33. The presence of the light shielding layer 34 further enhances the light shielding performance of the thin film transistors. The light from the thin film transistors is shielded, thereby preventing light leakage from the thin film transistor 33, which causes display performance of the liquid crystal display to decrease.

The above-described embodiments are only preferred embodiments of the present disclosure. It should be noted that, for a person skilled in the art, many modifications and improvements may be made to the present disclosure without departing from the principle of the present disclosure, and these modifications and improvements are also deemed to fall into the protection scope of the present application.

## Claims

1. A liquid crystal display, comprising:
a first thin film transistor layer and a first color filter arranged on an array substrate;
a color filter substrate arranged opposite the array substrate, wherein a second thin film transistor layer and a second color filter are disposed on the color filter substrate, a color resist of the first color filter is staggered with a color resist of the second color filter, and a thin film transistor of the first thin film transistor layer corresponds to a thin film transistor of the second thin film transistor layer; and
a light shielding layer disposed at a side of the array substrate, and disposed on the thin film transistor of the first thin film transistor layer in a vertical direction.

2. A liquid crystal display, comprising:
a first thin film transistor layer and a first color filter arranged on an array substrate; and
a color filter substrate arranged opposite the array substrate, wherein a second thin film transistor layer and a second color filter are disposed on the color filter substrate, a color resist of the first color filter is staggered with a color resist of the second color filter.

3. The liquid crystal display as claimed in claim 2, wherein a thin film transistor of the first thin film transistor layer corresponds to a thin film transistor of the second thin film transistor layer.

4. The liquid crystal display as claimed in claim 2, wherein at a side of the array substrate, a light shielding layer is disposed on a thin film transistor of the first thin film transistor layer in a vertical direction.

5. The liquid crystal display as claimed in claim 4, wherein the light shielding layer is disposed above the thin film transistor of the first thin film transistor layer.

6. The liquid crystal display as claimed in claim 4, wherein the light shielding layer is disposed under the thin film transistor of the first thin film transistor layer.

7. The liquid crystal display as claimed in claim 2, wherein at a side of the color filter substrate, a light shielding layer is disposed on a thin film transistor of the second thin film transistor layer in a vertical direction.

8. The liquid crystal display as claimed in claim 7, wherein the light shielding layer is disposed above the thin film transistor of the second thin film transistor layer.

9. The liquid crystal display as claimed in claim 7, wherein the light shielding layer is disposed under the thin film transistor of the second thin film transistor layer.

10. The liquid crystal display as claimed in claim 2, wherein the first color filter is disposed on a thin film transistor of the first thin film transistor layer, and the second color filter is disposed on a thin film transistor of the second thin film transistor layer.

11. The liquid crystal display as claimed in claim 2, wherein color resists of the first color filter and color resists of the second color filter are staggered in a sequence of a red color resist, a green color resist, and a blue color resist.

12. The liquid crystal display as claimed in claim 2, wherein color resists of the first color filter and color resists of the second color filter are staggered in a sequence of a red color resist, a green color resist, a blue color resist, and a white color resist.

13. The liquid crystal display as claimed in claim 2, wherein color resists of the first color filter and color resists of the second color filter are staggered in a sequence of a red color resist, a green color resist, a blue color resist, and a yellow color resist.

14. The liquid crystal display as claimed in claim 2, wherein the first thin film transistor layer comprises a plurality of thin film transistors disposed in a spaced-apart relationship.

15. The liquid crystal display as claimed in claim 2, wherein the second thin film transistor layer comprises a plurality of thin film transistors disposed in a spaced-apart relationship.
